# EUROPEAN PATENT SPECIFICATION

(11) **EP 2 458 549 B1**
(45) Date of publication and mention of the grant of the patent: **03.08.2016**
(21) Application number: 11182244.1
(22) Date of filing: 21.09.2011
(51) Int. Cl.: G06Q 30/06, H04L 29/08, G06F 21/10

(54) **Communication terminal, communication method, communication instrument, and communication system**
Kommunikationsendgerät, Kommunikationsverfahren, Kommunikationsinstrument und Kommunikationssystem
Terminal de communication, procédé de communication, instrument de communication et système de communication

(30) Priority: 26.11.2010 JP 2010263819
(43) Date of publication of application: 30.05.2012
(73) Proprietor: Sony Corporation, Tokyo 108-0075 (JP)
(72) Inventor: Odaka, Kentaro, Minato-ku, Tokyo 108-0075 (JP)
(74) Representative: D Young & Co LLP

(56) References cited:
- US-A1- 2003 154 486
- US-A1- 2007 198 363
- US-A1- 2007 220 575
- US-A1- 2008 248 740
- US-A1- 2010 218 207

## Description

The present disclosure relates to a communication terminal, a communication method, a communication instrument, and a communication system.

In recent years, a capacity of contents such as a movie has been increased. In order to look and listen to such large-capacity contents, a user generally takes a style such that he/she directly rents a recording media such as a Digital Versatile Disc (DVD) in a store such as a rental shop and enjoys the contents recorded in the recording media inside his/her own home. Along with progress in a preparation of a broadband network, it becomes possible for the user to enjoy the various kinds of high-definition contents inside his/her own home as well via a network. However, it is can be said that the enjoyment of selecting the contents as an object of viewing while jackets, explanations, and the like of the various kinds of contents are looked at in a store still has the value in terms of the experience in the real world. For example, various kinds of techniques have been disclosed as a technique for transferring the contents through the broadband network. One of these technique, for example, is disclosed in Japanese Patent Laid-Open No. 2006-59328.

However, in the store such as the rental shop, a significant cost is required for the stock management of the contents such as the popular products. For this reason, the kinds of contents which can be kept in the store are limited. Thus, it is possible that the user gets a situation that he/she cannot rent the contents which he/she desires to look and listen to when he/she wants to look and listen to the desired contents. For the purpose of avoiding that the user gets such a situation, there is tried a technique for writing the contents in a large-capacity recording media in real time in the store. However, it takes a lot of time to write the contents in the large-capacity recording media, and thus it may be impossible to carry out the instantaneous selling. Time required to write the contents to the large-capacity recording media becomes enormous, for example, when the high-definition contents such as a full High Definition (HD) image corresponding to 1,080 pixels in height, for example, are recorded in the large-capacity recording media such as the DVD or a Blu-ray Disc (BD).

On the other hand, a communication terminal has been in widespread use as an apparatus which the user can carry with him/her. Such a communication terminal begins to have performance by which the storage and reproduction of the contents become sufficiently possible. Thus, a situation in which the looking and listening of the contents can be enjoyed by using the communication terminal irrespective of time and a place is desired for such a communication terminal. The communication terminal is relatively small in screen size, and is relatively low in resolution. Therefore, the communication terminal has an advantage that an amount of information of the contents when the user looks and listens to the contents by using the communication terminal, for example, has only to be one out of tens of that when the user looks and listens to the contents by using such an apparatus as to have a large screen inside his/her own home or the like.

With such a communication terminal, however, in general, it may be impossible to reproduce the high-definition contents recorded in the large-capacity recording media. Even when the high-definition contents recorded in the large-capacity recording media can be reproduced in the communication terminal, there is the possibility that the data capacity of the contents becoming an object of the reproduction is further limited in the communication terminal. Therefore, it is necessary to re-transform the high-definition contents into the contents having an information amount corresponding to the performance of the communication terminal in some cases. If the high-definition contents need to be re-transformed into another one, in the communication terminal having the possibility that a battery capacity is further limited, there may be caused a problem that the frequency at which the battery runs down is increased, and an inconvenient situation is easy to get.

US 2007/0198363 A1 describes a method and system for managing pricing structures and delivery channels for rights in files on a network.

US 2008/248740 A1 describes a method and system for sharing data, such as video or audio content items (files), content items metadata, etc., among mobile device users and then purchasing one or more corresponding content items from an online store over a data network, such as the internet.

Various respective aspects and features of the invention are defined in the appended claims. Combinations of features from the dependent claims may be combined with features of the independent claims as appropriate and not merely as explicitly set out in the claims.

The present disclosure has been made in order to solve or at least alleviate the problems described above, and it is therefore desirable to provide a communication terminal, a communication method, a communication instrument, and a communication system with which contents can be sold to a user in a store without impairing instantaneousness, and the user can be caused to look and listen to higher-definition contents after the user bought the contents in the store.

According to the present disclosure, it is possible to provide the communication terminal, the communication method, the communication instrument, and the communication system with which the contents can be sold to the user in the store without impairing the instantaneousness, and the user can be caused to look and listen to the higher-definition contents after the user bought the contents in the store.

Embodiments of the invention will now be described with reference to the accompanying drawings, throughout which like parts are referred to by like references, and in which:
FIG. 1 is a view showing a configuration of a communication system according to a first embodiment of the present disclosure;
FIG. 2 is a block diagram showing a functional configuration of a communication terminal in the communication system according to the first embodiment of the present disclosure;
FIG. 3 is a block diagram showing a functional configuration of a first information providing apparatus in the communication system according to the first embodiment of the present disclosure;
FIG. 4 is a block diagram showing a functional configuration of a second information providing apparatus in the communication system according to the first embodiment of the present disclosure;
FIG. 5 is a diagram explaining an example of a fee for buy in the case where first contents data and second contents data are bought separately from each other by using the communication system according to the first embodiment of the present disclosure;
FIG. 6 is a diagram explaining an example of a fee for buy in the case where the first contents data and the second contents data are bought at the same time by using the communication terminal in the communication system according to the first embodiment of the present disclosure;
FIG. 7 is a flow chart showing a flow of processing executed by the communication system according to the first embodiment of the present disclosure;
FIG. 8 is a view showing a configuration of a communication system according to a second embodiment of the present disclosure;
FIG. 9 is a block diagram showing a functional configuration of a communication instrument in the communication system according to the second embodiment of the present disclosure; and
FIG. 10 is a flow chart showing a flow of processing executed by the communication system according to the second embodiment of the present disclosure.

Embodiments of the present disclosure will be described in detail hereinafter with reference to the accompanying drawings. It is noted that in this specification and the drawings, constituent elements which have substantially the same functional constitutions are designated by the same reference numerals or symbols, respectively, and thus a repeated description thereof is omitted for the sake of simplicity.

In addition, "DETAILED DESCRIPTION OF THE PREFERRED EMBODIMENTS" will be described below in accordance with the following order:
1. First Embodiment;
   1-1. Configuration of Communication System
   1-2. Functional Configuration of Communication Terminal
   1-3. Functional Configuration of First Information Providing Apparatus
   1-4. Functional Configuration of Second Information Providing Apparatus
   1-5. Fee for Buy When Two Pieces of Contents Data are Bought Separately from Each Other
   1-6. Fee for Buy When Two Pieces of Contents Data are Bought Simultaneously
   1-7. Processing Executed by Communication System
2. Second Embodiment;
   2-1. Configuration of Communication System
   2-2. Functional Configuration of Communication instrument
   2-3. Processing Executed by Communication System
3. Changes; and
4. Conclusion.

### <1. First Embodiment>

### [1-1. Configuration of Communication System]

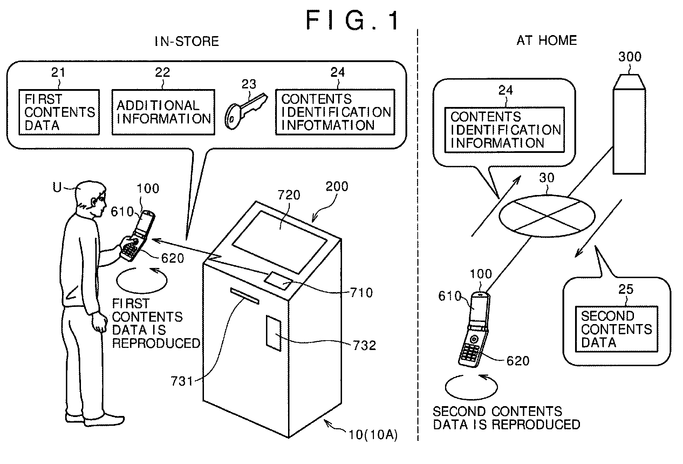

FIG. 1 is a view showing a configuration of a communication system according to a first embodiment of the present disclosure. The configuration of the communication system according to the first embodiment of the present disclosure will be described below with reference to FIG. 1. It is noted that in the following description, the communication system according to the first embodiment of the present disclosure is mainly designated with reference symbol "10A," and a communication system according to a second embodiment of the present disclosure is mainly designated with reference symbol "10B." However, when the communication system of the first embodiment, and the communication system of the second embodiment are not especially distinguished from each other, the communication system concerned is designated with reference numeral "10."

As shown in FIG. 1, the communication system 10A according to the first embodiment of the present disclosure includes at least a communication terminal 100, a first information providing apparatus 200, and a second information providing apparatus 300. The communication terminal 100 and the first information providing apparatus 200, for example, can communicate with each other by using a wireless signal. However, the communication terminal 100 and the first information providing apparatus 200, for example, may be connected to each other in a wired manner. The communication terminal 100 and the second information providing apparatus 300, for example, can communicate with each other through a network 30.

The communication terminal 100 is a terminal which a user U can carry and, for example, is supposed to be a mobile phone or the like. However, any type terminal can be adopted as the communication terminal 100 as long as it can be carried by the user U. It is assumed that as shown in FIG. 1, the user U walks into a store such as a rental shop with the communication terminal 100 being carried with him/her in order to buy desired contents data in the store. The user U can select contents which he/she desires to look and listen to while he/she looks at jackets, explanations and the like of the various kinds of contents in the store. Although the kind of the contents data is especially by no means limited, for example, the contents data may be moving image data, may be sound data, or may be moving image data with a sound in which moving image data and the sound data are contained (for example, data becoming the origin of a movie, or the like).

The first information providing apparatus 200, for example, is an apparatus installed in the store such as the rental shop and, for example, includes a transmitting unit 710, an input/output (I/O) unit 720, an input slot 731, a takeoff slot 732, and the like. When the user U selects contents data which he/she desires to buy in the store, for example, he/she can input information used to identify the contents data thus selected to the first information providing apparatus 200 by using the I/O unit 720. The I/O output unit 720, for example, includes a display unit, and thus can display information on contents data which can be sold to the user U on the display unit. The user U can confirm the contents data selected by him/her in accordance with the information on the contents data.

The I/O unit 720, for example, further includes an input unit. Thus, the I/O unit 720 can receive the information used to identify the contents data which the user U has selected from the user U by using the input unit thereof. When the first information providing apparatus 200 specifies the contents data in accordance with the information inputted thereto through the input unit and confirms that an amount of paid money for the contents data has been thrown into the input slot 731, the first information providing apparatus 200 can transmit the contents data thus specified as first contents data 21 to the communication terminal 100 through the transmitting unit 710.

The first contents data 21 has a size corresponding to a reproducing function and a displaying function which the communication terminal 100 has. Thus, it is supposed that the first contents data 21 is contents data having a relatively small size such as contents data having a resolution corresponding to a Quarter-Video Graphics Array (QVGA). When an amount of paid money thrown into the input slot 731 is larger than an amount of money of the first contents data 21, a difference amount of money may be returned back to the user U through the takeoff slot 732. The throwing of an amount of paid money from the user U, or the returning of a difference amount of money to the user U may be carried out in the form of either a paper money or a coin, or may be carried out in the form of data.

The communication terminal 100 can receive the first contents data 21 transmitted thereto from the first information providing apparatus 200. For example, when the first contents data 21 is to be reproduced by using an Advanced Video Coding (AVC) having 384 Kbps, and is transmitted from the first information providing apparatus 200 to the communication terminal 100 by using a proximity radio transferring technique having a transfer speed of 375 Mbps, the first contents data 21 can be transmitted at a speed which is nearly 1,000 times a reproduction speed. This, for example, means that in order to complete the transmission of the first contents data 21 composed of an about two-hour movie, it takes only a little less than about 10 seconds. When the transmission of the first contents data 21 is completed for such a short time, it is possible to reduce a stress applied to the user U.

The apparatuses which communicate with each other by using the proximity radio transferring technique, for example, includes electrode plates, called electric field coupler, which can be coupled to each other by an electric field. Also, when the electric couplers of the apparatuses, for example, are made to be close to each other at a distance within 3 cm, a change in an induced electric field generated by one electric field coupler is sensed by the other electric field coupler, thereby realizing an electric field communication between both of the apparatuses.

The communication terminal 100, for example, not only can stream-reproduce the first contents data 21 received from the first information providing apparatus 200, but also can reproduce the first contents data 21 after the first contents data 21 is stored in a storing unit built in the terminal itself once. The user U, for example, inputs a predetermined reproducing manipulation operation through a manipulation input area 620, thereby making it possible to reproduce the first contents data 21 in the communication terminal 100. The communication terminal 100, for example, can successively display the data obtained by reproducing the first contents data 21 on a display area 610.

The first information providing apparatus 200 can transmit contents identification information 24 as identification information used to identify second contents data 25 whose size is larger than that of the first contents data 21 together with the first contents data 21 to the communication terminal 100. In such a case, the communication terminal 100 can receive the contents identification information 24 together with the first contents data 21 from the first information providing apparatus 200. Although the second contents data 25, for example, has the same contents as those of the first contents data 21, the second contents data 25 contains therein contents data which has a higher definition than that of the first contents data 21.

The communication terminal 100 can transmit a request containing therein the contents identification information 24 to the second information providing apparatus 300 which holds therein the second contents data 25. In order that the communication terminal 100 may transmit such a request to the second information providing apparatus 300, for example, there is required an environment in which the communication terminal 100 can be connected to the network 30. For this reason, for example, when the user U leaves the store and connects the communication terminal 100 to the network 30 inside his/her own home, the communication terminal 100 can transmit such a request to the second information providing apparatus 300. Although an Uniform Resource Locator (URL) of the second contents data 25 in the network 30 can be used as the contents identification information 24, the contents identification information 24 is especially by no means limited as long as information is adopted which is used to identify uniquely the second contents data 25. In addition, a place where the communication terminal 100 is connected to the network 30 is not limited to the place in the home.

The communication terminal 100, for example, not only can stream-reproduce the second contents data 25 received from the second information providing apparatus 300, but also can reproduce the second contents data 25 after the second contents data 25 is stored in the storing device built in the terminal itself once. The user U, for example, inputs a predetermined reproducing manipulation operation through the manipulation input area 620, thereby making it possible to reproduce the second contents data 25 in the communication terminal 100. The communication terminal 100, for example, can successively display the data obtained by reproducing the second contents data 25 on a display area 610. In addition, the communication terminal 100 may transfer the second contents data 25 to a reproducing instrument having a higher reproducing function than that of the communication terminal 100, and may cause the reproducing instrument to reproduce the second contents data 25.

Timings at which the first contents data 21 and the second contents data 25 are bought, respectively, either may be simultaneous or may be different from each other. That is to say, the user U may buy simultaneously the first contents data 21 and the second contents data 25 through a communication between the communication terminal 100 and the first information providing apparatus 200 while he/she stays in the store. In addition, the user U may buy the first contents data 21 through a communication between the communication terminal 100 and the first information providing apparatus 200 while he/she stays in the home, and may buy the second contents data 25 through a communication between the communication terminal 100 and the second information providing apparatus 300 while he/she stays in his/her own home.

As has been described so far, for example, the user U can buy the first contents data 21 while he/she looks at the jacket, the explanation and the like of the first contents data 21 in the store. Since the first contents data 21 is supposed to be smaller in size than the second contents data 25, a seller of the first contents data 21 can sell the first contents data 21 to the user U in the store without impairing the instantaneousness. In addition, the user U can acquire the contents identification information 24 used to identify the second contents data 25 concurrently with the buying of the first contents data 21. As a result, after the user has bought the contents data in the store, he/she can look and listen to the higher-definition second contents data 25 by using the contents identification information 24.

In addition to the first contents data 21 and the contents identification information 24, additional information 22, a first key 23 and the like may be contained in the data transmitted from the first information providing apparatus 200 to the communication terminal 100. The additional information 22 is metadata used to break cipher made for the first contents data 21 by using the first key 23. For example, when the reproduction of the first contents data 21 is limited by using a Digital Rights Management (DRM) technique, the additional information 22 is used as the metadata used to limit the reproduction of the first contents data 21.

When as described above, the user U buys the first contents data 21 in the rental shop, a reproducible period of time is assigned to the first contents data 21. In this case, however, a reproducible period of time is set in the additional information 22. In this case, the additional information 22 is commonly used in the first contents data 21 and the second contents data 25. However, the additional information 22 may be used in the first contents data 21, but may not be used in the second contents data 25. In this case, additional information used in the second contents data 25 is specially required.

The first key 23 is used to break the cipher made for the first contents data 21. When the cipher made for the first contents data 21 is broken by using the first key 23, various pieces of information set in the additional information 22 may be used. In this case, the first key 23 is commonly used in the first contents data 21 and the second contents data 25. However, the first key 23 may be used in the first contents data 21, but may not be used in the second contents data 25. In this case, a second key used in the second contents data 25 is specially required.

In the case where the additional information 22, the first key 23 and the like are contained in the data transmitted from the first information providing apparatus 200 to the communication terminal 100, even when the first contents data 21 is transmitted from the communication terminal 100 to another apparatus, the additional information 22, the first key 23 and the like are transmitted together with the first contents data 21. As a result, in another apparatus which has received the first contents data 21 from the communication terminal 100, the first key 23 can be used for the purpose of breaking the cipher made for the first contents data 21, and the additional information 22 can be used for the purpose of breaking the cipher by using the first key 23.

With regard to a timing enabling the first contents data 21 to be received from the first information providing apparatus 200 in the communication terminal 100, various kinds of timings are supposed. When as the premise for receipt of the first contents data 21 in the communication terminal 100, the first contents data 21 is paid, a rental fee, a purchase fee and the like occur. With regard to a method as well of settling the fee, various kinds of settlement methods are supposed. However, a technique is supposed with which after the settlement for use of a credit card or the like has been confirmed, the first contents data 21 can be transmitted from the first information providing apparatus 200 to the communication terminal 100.

In addition, a technique is also supposed with which the transmission of the first contents data 21 from the first information providing apparatus 200 to the communication terminal 100 is made possible before the settlement has been confirmed, and the transmission of the first key 23 used to break the cipher made for the first contents data 21 from the first information providing apparatus 200 to the communication terminal 100 is made possible after the settlement is confirmed. However, if after the settlement is early made, both of the first contents data 21 and the first key 23 are enabled to be received in the communication terminal 100, it is supposed that the convenience is relatively high because both of the first contents data 21 and the first key 23 can be received by one manipulation operation.

### [1-2. Functional Configuration of Communication Terminal]

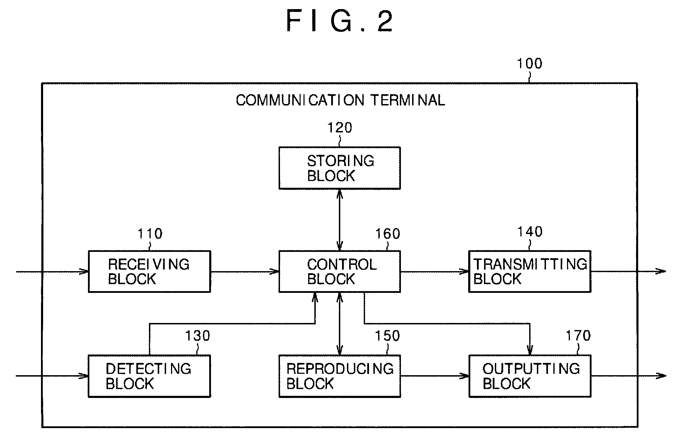

FIG. 2 is a block diagram showing a functional configuration of the communication terminal 100 in the communication system 10A according to the first embodiment of the present disclosure. The functional configuration of the communication terminal 100 in the first embodiment of the present disclosure will be described below with reference to FIG. 2.

As shown in FIG. 2, the communication terminal 100 in the first embodiment of the present disclosure includes at least a receiving block 110, a storing block 120, a detecting block 130, and a transmitting block 140. In addition, the communication terminal 100 includes a reproducing block 150, a control block 160, an outputting block 170, and the like as may be necessary.

The receiving block 110 has a function of receiving both of the first contents data 21 and the contents identification information 24 from the first information providing apparatus 200. As described above, the contents identification information 24 is information used to identify the second contents data 25 whose size is smaller than the first contents data 21. As described above, the receiving block 110, for example, can receive both of the first contents data 21 and the contents identification information 24 in the store such as the rental shop. The receiving block 110, for example, can receive both of the first contents data 21 and the contents identification information 24 from the first information providing apparatus 200 by using the proximity radio transferring technique.

The receiving block 110 may receive both of the first contents data 21 and the contents identification information 24 from the first information providing apparatus 200 by using a communication technique using a wireless signal other than the proximity radio transferring technique. In addition, the receiving block 110 may receive both of the first contents data 21 and the contents identification information 24 from the first information providing apparatus 200 by using a wired communication. The receiving block 110, for example, is composed of a communication apparatus.

The storing block 120 has a function of storing both of the first contents data 21 and the contents identification information 24 both received by the receiving block 110. In addition, the storing block 120 can store therein various kinds of programs in accordance with which the communication terminal 100 is made to function. The various kinds of programs stored in the storing block 120, for example, are used to realize the functions of the reproducing block 150 and the control block 160. The storing block 120, for example, is composed of a storing device such as a Hard Disc Drive (HDD).

The detecting block 130 has a function of detecting a manipulation operation made by the user U, and outputting a manipulation signal corresponding to the manipulation operation thus detected to the control block 160. The detecting block 130, for example, has a function of detecting a predetermined transmission manipulation operation made by the user U. Although any predetermined transmission manipulation operation may be made, for example, a manipulation operation for depressing a transmission button provided in a manipulation input area 620, or the like can correspond to the predetermined transmission manipulation operation. As described above, for example, it is supposed that after the user U has connected the communication terminal 100 to the network 30, thereby carrying out a preparation for transmitting the contents identification information 24 to the second information providing apparatus 300, he/she makes a predetermined transmission manipulation operation. The detecting block 130, for example, is composed of an input unit such as a button provided in the manipulation input area 620.

The transmitting block 140 has a function of, when the predetermined transmission operation is detected by detecting block 130, transmitting the contents identification information 24 stored in the storing block 120 to the second information providing apparatus 300 which holds therein the second contents data 25 which is to be identified in accordance with the contents identification information 24. As a result, the communication terminal 100 can download the second contents data 25 held by the second information providing apparatus 300. The transmission of the second contents data 25 by the transmitting block 140 is carried out either in a wireless manner or in a wired manner. The transmitting block 140, for example, can transmit the contents identification information 24 to the second information providing apparatus 300 through the network 30. The transmitting block 140, for example, is composed of a communication apparatus.

The user U, for example, may reproduce the first contents data 21 in the communication terminal 100 in the store or the like. That is to say, the communication terminal 100 can also include the reproducing block 150 for reproducing the first contents data 21 stored in the storing block 120. The reproducing block 150 can reproduce the first contents data 21 in accordance with the control made by the control block 160. For example, although the reproducing block 150 can stream-reproduce the first contents data 21, the reproducing block 150 may not necessarily stream-reproduce the first contents data 21. The reproducing block 150 can also reproduce the first contents data 21 offline.

The reproducing block 150, for example, is composed of a Central Processing Unit (CPU), a Random Access Memory (RAM), and the like. The CPU develops in the RAM the programs stored in the storing block 120 to execute the programs, thereby realizing a function of the reproducing block 150. However, the reproducing block 150 is by no means limited to such a configuration, and thus the reproducing block 150 may also be composed of dedicated hardware.

When the first key 23 is transmitted from the first information providing apparatus 200, the receiving block 110 can receive the first contents data 21 from the first information providing apparatus 200, and also can receive the first key 23. The first key 23 can be used to break the cipher made for the first contents data 21 stored in the storing block 120. Therefore, after the reproducing block 150 has broken the cipher made for the first contents data 21 stored in the storing block 120, the reproducing block 150 can reproduce the first contents data 21 by using the first key 23 received by the receiving block 110.

The receiving block 110 can also receive the second contents data 25 which is to be identified in accordance with the contents identification information 24 received by the receiving block 110 from the second information providing apparatus 300. For example, when a request containing therein the contents identification information 24 is transmitted from the transmitting block 140 to the second information providing apparatus 300, in response to the request, the receiving block 110 can receive the second contents data 25 which is to be identified in accordance with the contents identification information 24 from the second information providing apparatus 300. The receipt of the second contents data 25 by the receiving block 110, for example, is carried out when the user U is inside his/her home.

The second contents data 25 received by the receiving block 110 either may be stream-reproduced by the reproducing block 150, or the second contents data 25 stored in the storing block 120 may be reproduced when the second contents data 25 is stored in the storing block 120 once, and the predetermined reproducing manipulation operation made by the user U is detected by the detecting block 130. In addition, the second contents data 25 received by the receiving block 110 may be transmitted from the transmitting block 140 to another apparatus, and may be reproduced in another apparatus.

When the reproducing block 150 breaks the cipher made for both of the first contents data 21 and the second contents data 25, there are supposed the case where a key common to the first contents data 21 and the second contents data 25 is used, and the case where different keys are used for the first contents data 21 and the second contents data 25, respectively. In the case where the common key is used, for the purpose as well of breaking the cipher made for the second contents data 25, the reproducing block 150 can use the first key 23 used to break the cipher made for the first contents data 21.

In this case, after the storing block 120 has stored the first key 23 received by the receiving block 110, and the cipher made for the second contents data 25 received by the receiving block 110 is broken, the second contents data 25 is reproduced. When the key common to the first contents data 21 and the second contents data 25 is used in such a way, it can be said that there are offered an effect that the management of the key does not become troublesome, and an effect that it is possible to reduce the storage area in which the key is preserved. It is noted that when the first key 23 is used by the reproducing block 150, as described above, the additional information 22 can be used.

In the case where the different keys are used for the purpose of breaking the cipher made for the first contents 21 and the second contents data 25 by the reproducing block 150, the receiving block 110 further receives the secondary key used to break the cipher made for the second contents data 25 from the first information providing apparatus 200. In addition, after the reproducing block 150 has broken the cipher made for the second contents data 25 received by the receiving block 110 by using the secondary key received by the receiving block 110, the reproducing block 150 reproduces the second contents data 25.

It is noted that when the second key is used by the reproducing block 150, as described above, the additional information can be used. The additional information used together with the second key either may be identical to the additional information 22 used together with the first key 23 or may be different from the additional information 22 used together with the first key 23.

The control block 160 has a function of controlling the operations of the functional blocks 110 to 170 within the communication terminal 100. The control block 160, for example, generates various kinds of requests in accordance with the manipulation operation(s) detected by the detecting block 130. The various kinds of requests thus generated are transmitted from the transmitting block 140. The control block 160, for example, is composed of a CPU, a RAM, and the like. The CPU develops the programs stored in the storing block 120 in the RAM to execute the programs, thereby realizing a function of the reproducing block 160. However, the control block 160 is by no means limited to such a configuration, and thus the control block 160 may also be composed of dedicated hardware.

The outputting block 170 has a function of outputting various pieces of information and various kinds of requests in accordance with the control made by the control block 160. In addition, the outputting block 170 has a function of outputting the first contents data 21 and the second contents data 25 both reproduced by the reproducing block 150. For example, when the first contents data 21 and the second contents data 25 are both the sound data, the outputting block 170 is composed of a sound outputting unit. In this case, it is only necessary for the sound outputting unit to output the sound in accordance with the sound data. For example, when the first contents data 21 and the second contents data 25 are both moving image data, the outputting block 170 is composed of a display unit having the display area 610. In this case, it is only necessary for the display unit to output an image to the display area 610 in accordance with moving image data.

### [1-3. Functional Configuration of First Information Providing Apparatus]

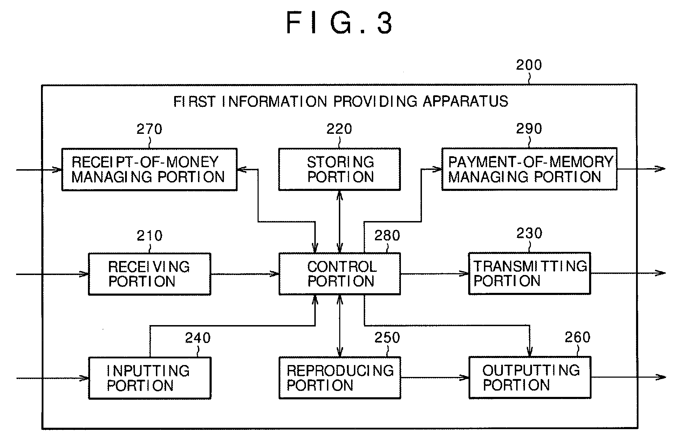

FIG. 3 is a block diagram showing a functional configuration of the first information providing apparatus 200 in the communication system 10A according to the first embodiment of the present disclosure. The functional configuration of the first information providing apparatus 200 in the first embodiment of the present disclosure will be described below with reference to FIG. 3.

As shown in FIG. 3, the first information providing apparatus 200 in the first embodiment of the present disclosure includes at least a receipt-of-money managing portion 270, a control portion 280, a payment-of-money managing portion 290, and a transmitting portion 230. In addition, the first information providing apparatus 200 includes a receiving portion 210, a storing portion 220, an inputting portion 240, a reproducing portion 250, an outputting portion 260, and the like as may be necessary.

The receipt-of-money managing portion 270 has a function of receiving an amount of paid money for the first contents data 21. The receipt of an amount of paid money for the first contents data 21 either may be carried out by receiving a paper money or a coin thrown into the input slot 31 by the user U, or may be carried out by receiving the data inputted to the receipt-of-money managing portion 270. The data inputted to the receipt-of-money managing portion 270, for example, either may be one stored in the storing portion 220, or may be one stored in a server for managing the balance of money which the user U possesses.

The control portion 280 has a function of calculating a difference amount of money by subtracting an amount of money of the first contents data 21 from an amount of paid money received by the receipt-of-money managing portion 270. For example, when a predetermined buy manipulation operation representing the effect that the first contents data 21 is desired to be bought is received from the user U through the inputting portion 240, the control portion 280 may calculate a difference amount of money. In addition, the control portion 280 has a function of controlling the operations of the functional portions 210 to 280 within the first information providing apparatus 200. The control portion 280, for example, is composed of a CPU, a RAM, and the like. The CPU develops in the RAM the programs stored in the storing portion 220 to execute the programs, thereby realizing a function of the storing portion 220. However, the control portion 280 is by no means limited to such a configuration, and thus the control portion 280 may also be composed of dedicated hardware.

The payment-of-money managing portion 290 has a function of outputting a difference amount of money calculated by the control portion 280. The output of the difference amount of money, for example, either may be carried out by returning a paper money or a coin through a takeoff slot 732 by the user U, or may be carried out by outputting the data from the payment-of-money managing portion 290. The data outputted from the payment-of-money managing portion 290, for example, may be stored in the storing portion 220, or may be stored in the server for managing the balance of money which the user U possesses.

The transmitting portion 230 has a function of transmitting the first contents data 21, and the contents identification information 24 used to identify the second contents data 25 to the communication terminal 100. As described above, the second contents data 25 is contents data whose size is larger than that of the first contents data 21. The first contents data 21 and the contents identification information 24, for example, are both stored in the storing portion 220. In this case, the transmitting portion 230 transmits the first contents data 21 and the contents identification information 24 which have been acquired from the storing portion 220 in accordance with the control made by the control portion 280 to the communication terminal 100. The transmitting portion 230, for example, is composed of the transmitting unit 710 described above.

The receiving portion 210 has a function of receiving the various pieces of information and the various kinds of requests which have been transmitted from the communication terminal 100. The receiving portion 210 can output the various pieces of information and the various kinds of requests which have been received from the communication terminal 100 to the control portion 280. The receiving portion 210, for example, is composed of a receiving apparatus (not shown).

The storing portion 220 has a function of storing therein the first contents data 21 and the contents identification information 24. In addition, the storing portion 220 can also store therein information relating to the first contents data 21, and the data outputted from the payment-of-money managing portion 290. The storing portion 220 can store therein various kinds of programs for making the first information providing apparatus 200 to function. The various kinds of programs which the storing portion 220 stores therein, for example, are used to realize the functions of both of the reproducing portion 250 and the control portion 280. The storing portion 220, for example, is composed of a storing device such as an HDD.

The inputting portion 240 has a function of receiving the predetermined buy manipulation operation representing the effect that the first contents data 21 is desired to be bought. When the inputting portion 240 has received the predetermined buy manipulation operation from the user U, the inputting portion 240 outputs a buy manipulation signal corresponding to the predetermined buy manipulation thus received to the control portion 280. In the above case, the inputting portion 240 is composed of an input unit which the I/O unit 720 includes. Although it is supposed that a touch panel, a button or the like is used as the inputting unit, the inputting unit is especially by no means limited.

The reproducing portion 250 has a function of reproducing the first contents data 21 stored in the storing portion 220. The reproducing portion 250 can successively output the first contents data 21 thus reproduced to the outputting portion 260 in accordance with the control made by the control portion 280. The reproducing portion 250, for example, is composed of a CPU, a RAM, and the like. The CPU develops the programs stored in the storing portion 220 in the RAM to execute the programs, thereby realizing a function of the reproducing portion 250. However, the reproducing portion 250 is by no means limited to such a configuration, and thus the reproducing portion 250 may also be composed of dedicated hardware.

The outputting portion 260 has a function of successively outputting the first contents data 21 reproduced by the reproducing portion 250. For example, when the first contents data 21 is sound data, it is only necessary that the outputting portion 260 is composed of a sound outputting unit, and the sound outputting unit outputs a sound in accordance with the sound data. For example, when the first contents data 21 is moving image data, it is only necessary that the outputting portion 260 is composed of a display unit which the I/O unit 720 includes, and the display unit outputs a moving image in accordance with the moving image data.

In addition thereto, the outputting portion 260 can output information relating to the first contents data 21. The outputting portion 260 outputs the first contents data 21 reproduced by the reproducing portion 250, and the information relating to the first contents data 21, whereby the user U can consider whether or not the first contents data 21 will be bought. When the user U decides that he/she buys the first contents data 21, for example, it is only necessary that he/she inputs a predetermined buy manipulation operation representing an effect that he/she will buy the first contents data 21 to the inputting portion 240.

### [1-4. Functional Configuration of Second Information Providing Apparatus]

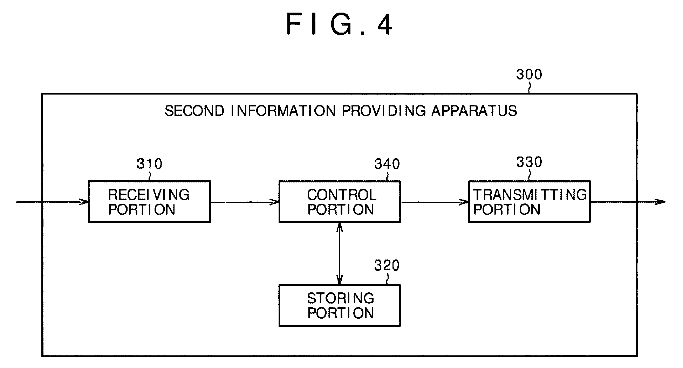

FIG. 4 is a block diagram showing a functional configuration of the second information providing apparatus 300 in the communication system 10A according to the first embodiment of the present disclosure. The functional configuration of the second information providing apparatus 300 in the first embodiment of the present disclosure will be described below with reference to FIG. 4.

As shown in FIG. 4, the second information providing apparatus 300 in the first embodiment of the present disclosure includes at least a receiving portion 310, and a transmitting portion 330. In addition, the second information providing apparatus 300 includes a storing portion 320, a control portion 340, and the like as may be necessary.

The receiving portion 310 has a function of receiving the contents identification information 24 from the communication terminal 100. The receiving portion 310, for example, can receive the contents identification information 24 from the communication terminal 100 through the network 30. The receiving portion 310 can receive the contents identification information 24 received from the communication terminal 100 to output to the control portion 340. The receiving portion 310, for example, is composed of a communication apparatus.

The transmitting portion 330 has a function of transmitting the second contents data 25 which is to be identified in accordance with the contents identification information 24 received by the receiving portion 310 to the communication terminal 100. Specifically, the second contents data 25, for example, is stored in the storing portion 320. As described above, the URL of the second contents data 25 in the network 30, for example, can be used as the contents identification information 24. The transmitting portion 330, for example, is composed of a communication apparatus.

The control portion 340 has a function of controlling the operations of the functional portions 310 to 340 within the second information providing apparatus 300. The control portion 340, for example, generates various kinds of responses in accordance with various kinds of requests received by the receiving portion 310. Also, the various kinds of responses thus generated are transmitted to the transmitting portion 330. Specifically, the control portion 340, for example, can acquire the second contents data 25 which is to be identified in accordance with the contents identification information received by the receiving portion 310 from the storing portion 320, and can output the second contents data 25 thus acquired to the transmitting portion 330. The control portion 340, for example, is composed of a CPU, a RAM, and the like. The CPU develops in the RAM the programs stored in the storing portion 320 to execute the programs, thereby realizing a function of the control portion 340. However, the control portion 340 is by no means limited to such a configuration, and thus the control portion 340 may also be composed of dedicated hardware.

The storing portion 320 has a function of storing the second contents data 25. In addition, the storing portion 320 can store therein various kinds of programs for making the second information providing apparatus 300 to function. The various kinds of programs which the storing portion 320 stores therein, for example, are used to realize the function of the control portion 340. The storing portion 340, for example, is composed of a storing device such as an HDD.

### [1-5. Money for Buy When Two Pieces of Contents Data are Bought Separately from Each Other]

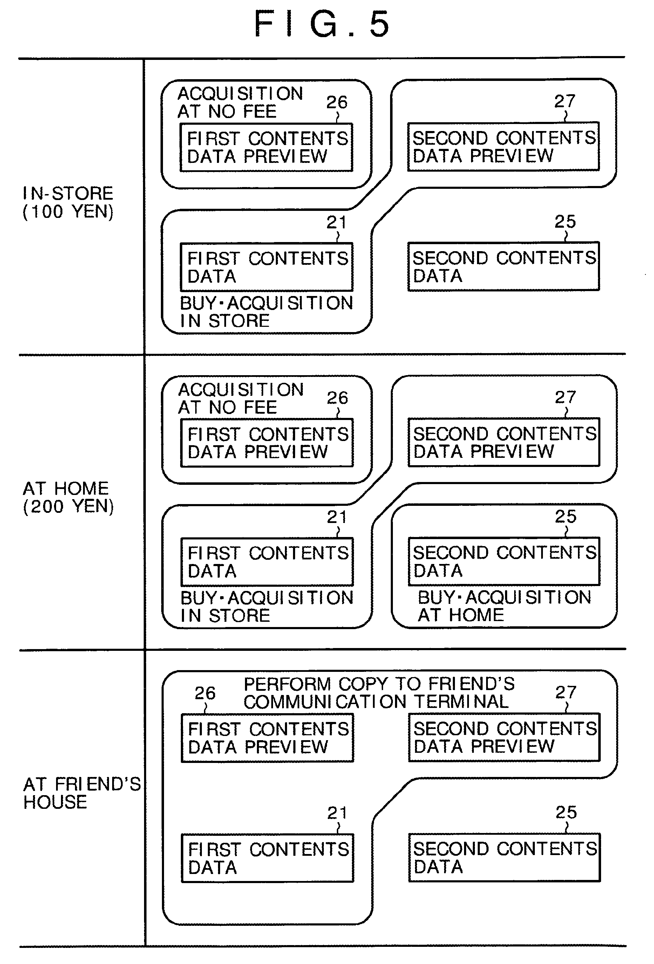

FIG. 5 is a diagram explaining an example of money for buy when the first contents data 21 and the second contents data 25 are bought separately from each other by using the communication system 10A according to the first embodiment of the present disclosure. The example of the money for buy when the first contents data 21 and the second contents data 25 are bought separately from each other by using the communication system 10A according to the first embodiment of the present disclosure will be described below with reference to FIG. 5.

It is supposed that as shown in FIG. 5, the user U buys the first contents data 21 in the store, and also acquires the first contents data 21 from the first information providing apparatus 200 by using the communication terminal 100. An amount of money of the first contents data 21 at this time, for example, is supposed to be 100 yen. In addition, it is supposed that as shown in FIG. 5, the user U does not buy the second contents data 25 in the store, but buys the second contents data 25 inside his/her own home and acquires the second contents data 25 from the second information providing apparatus 300 by using the communication terminal 100. An amount of money of the second contents data 25 at this time, for example, is supposed to be 200 yen. As above, when the first contents data 21 and the second contents data 25 are bought separately from each other, it is possible not to especially carry out a discount for the second contents data 25.

In addition thereto, as shown in FIG. 5, a first contents data preview 26 can be acquired at no fee in the store. In a word, before buy of the first contents data 21, the first information providing apparatus 200 transmits the first contents data preview 26 to the communication terminal 100 and thus the communication terminal 100 can reproduce the first contents data preview 26 received from the first information providing apparatus 200. The user U can determine whether or not the first contents data 21 will be bought by browsing the first contents data preview 26 thus reproduced. It is noted that the first contents data preview 26 is smaller in size than the first contents data 21. Therefore, by browsing the first contents data preview 26 thus reproduced, the user U can grasp the contents of the first contents data 21 for a relatively short time, and thus can speedily determine whether or not the first contents data 21 will be bought.

In addition, as shown in FIG. 5, the user U can acquire a second contents data preview 27 at no fee in the store concurrently with buy of the first contents data 21. In a word, before buy of the second contents data 25, the first information providing apparatus 200 transmits the second contents data preview 27 to the communication terminal 100, and thus the communication terminal 100 can reproduce the second contents data preview 27 received from the first information providing apparatus 200. The user U can determine whether or not the second contents data 25 will be bought by browsing the second contents data preview 27 thus reproduced. It is noted that the second contents data preview 27 is smaller in size than the second contents data 25. Therefore, by browsing the second contents data preview 27 thus reproduced, the user U can grasp the contents of the second contents data 25 for a relatively short time, and thus can speedily determine whether or not the first contents data 25 will be bought.

As shown in FIG. 5, the user U, for example, can copy the first contents data preview 26, the second contents data preview 27, and the first contents data 21 from the communication terminal 100 to a friend's communication terminal at a friend's house. In this case, the additional information 22 and the first key 23 can also be transmitted together with the first contents data 21 from the communication terminal 100 to the friend's communication terminal. A friend of the user U can reproduce the first contents data 21 by using the additional information 22 and the first key 23 in his/her communication terminal.

### [1-6. Money for Buy When Two Pieces of Contents Data are Simultaneously Bought]

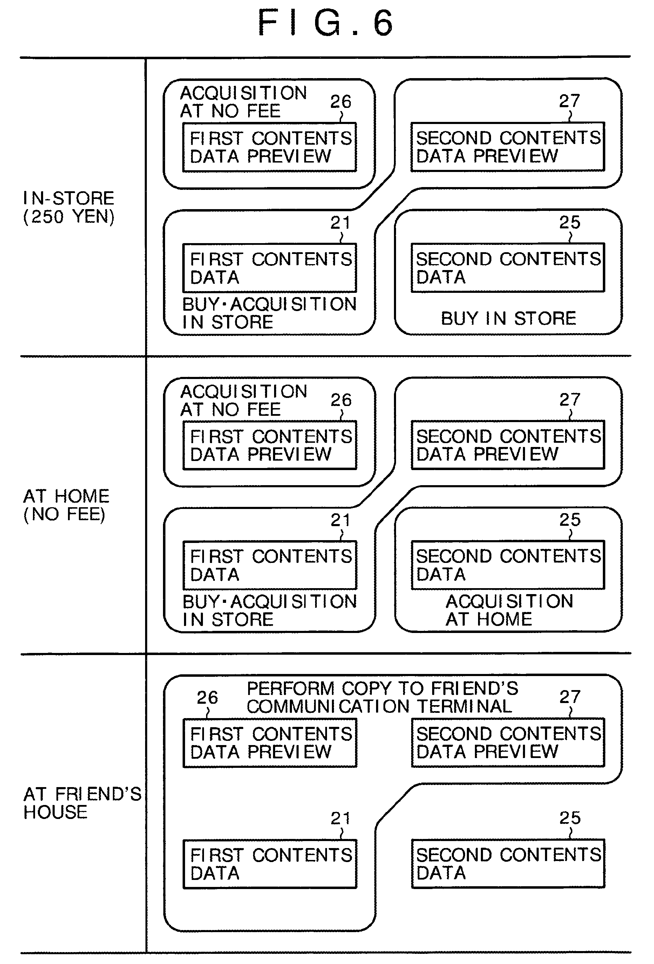

FIG. 6 is a diagram explaining an example of money for buy when the first contents data and the second contents data are simultaneously bought by using the communication system 10A in the first embodiment of the present disclosure. The example of the money for buy when the first contents data 21 and the second contents data 25 are simultaneously bought by using the communication system 10A in the first embodiment of the present disclosure will be described below with reference to FIG. 6.

It is supposed that as shown in FIG. 6, the user U buys the first contents data 21 in the store and also acquires the first contents data 21 from the first information providing apparatus 200 by using the communication terminal 100. An amount of money of the first contents data 21 at this time, for example, is supposed to be 100 yen. In addition, it is supposed that as shown in FIG. 6, the user U buys the second contents data 25 in the store and also acquires the second contents data 25 from the second information providing apparatus 300 inside his/her own home by using the communication terminal 100. An amount of money of the second contents data 25 at this time, for example, is 150 yen obtained by discounting 50 yen from 200 yen. When the first contents data 21 and the second contents data 25 are simultaneously bought, the discount for the second contents data 25 may be carried out.

More specifically, it is supposed that the inputting portion 240 of the first information providing apparatus 200 installed in the store can receive an input of prepay information representing an effect that the payment for the second contents data 25 will be carried out in the first information providing apparatus 200. The control portion 280 of the first information providing apparatus 200 determines whether or not the input of the prepay information has been received by the inputting portion 240. When the control portion 280 of the first information providing apparatus 200 determines that the input of the prepay information has been received by the inputting portion 240, the control portion 280 calculates a difference amount of money by subtracting both of an amount of money of the first contents data 21, and an amount of money of the second contents data 25 from an amount of paid money received by the receipt-of-money managing portion 270. The case where the prepay information is inputted, as shown in FIG. 6, corresponds to the case where the two pieces of contents data are simultaneously bought.

When the control portion 280 of the first information providing apparatus 200 determines that the input of the prepay information is not received by the inputting portion 240, the control portion 280 calculates a difference amount of money by subtracting an amount of money of the first contents data 21 from an amount of paid money received by the receipt-of-money managing portion 270. The case where the prepay information is not inputted, as shown in FIG. 5, corresponds to the case where the two pieces of contents data are bought separately from each other.

When the control portion 280 of the first information providing apparatus 200 determines that the input of the prepay information has been received by the inputting portion 240, the control portion 340 of the second information providing apparatus 300 registers an amount of money of the second contents data 25 in the storing portion 320. When an amount of money of the second contents data 25 subtracted by the control portion 280 of the first information providing apparatus 200 is set lower than an amount of money of the second contents data 25 registered by the control portion 340 of the second information providing apparatus 300, the user U can receive the discount for the second contents data 25 owing to the prepay.

### [1-7. Processing Executed by Communication System]

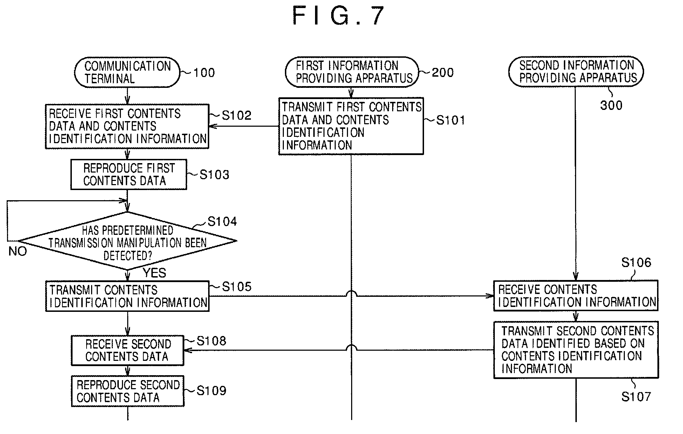

FIG. 7 is a flow chart showing a flow of processing executed by the communication system 10A according to the first embodiment of the present disclosure. The flow of processing executed by the communication system 10A according to the first embodiment of the present disclosure will be described below with reference to FIG. 7.

As shown in FIG. 7, firstly, the transmitting portion 230 of the first information providing apparatus 200 transmits both of the first contents data 21 and the contents identification information 24 to the communication terminal 100 (Step S101). Next, the receiving block 110 of the communication terminal 100 receives the first contents data 21 and the contents identification information 24 from the first information providing apparatus 200 (Step S102). The reproducing block 150 of the communication terminal 100 reproduces the first contents data 21 (Step S103).

While the first contents data 21 is reproduced by the reproducing block 150 of the communication terminal 100, for example, the outputting block 170 of the communication terminal 100 may display a message such as "will you acquire this part?" on the display area 610. In this case, for example, the user U can make a manipulation operation for selection of "YES" for this message. The manipulation operation concerned corresponds to an example of a predetermined transmission manipulation. On the other hand, for example, the user U can also make a manipulation operation for selection of "NO" for this message. The control block 160 of the communication terminal 100 determines whether or not the predetermined transmission manipulation operation has been detected by the detecting block 130 (Step S104). When the control block 160 of the communication terminal 100 determines that the predetermined transmission manipulation operation has not been detected by the detecting block 130 ("No" in Step S104), the operation is returned back to the processing in Step S104. On the other hand, when the control block 160 of the communication terminal 100 determines that the predetermined transmission manipulation operation has been detected by the detecting block 130 ("Yes" in Step S104), the transmitting block 140 transmits the contents identification information 24 to the second information providing apparatus 300 (Step S105).

The receiving portion 310 of the second information providing apparatus 300 receives the contents identification information 24 from the communication terminal 100 (Step S106). The transmitting portion 330 transmits the second contents data 25 which is to be identified in accordance with the contents identification information 24 to the communication terminal 100 (Step S107). The receiving block 110 of the communication terminal 100 receives the second contents data 25 transmitted thereto from the second information providing apparatus 300 (Step S108). Also, the reproducing block 150 reproduces the second contents data 25 (Step S109).

### <2. Second Embodiment>

### [2-1. Configuration of Communication System]

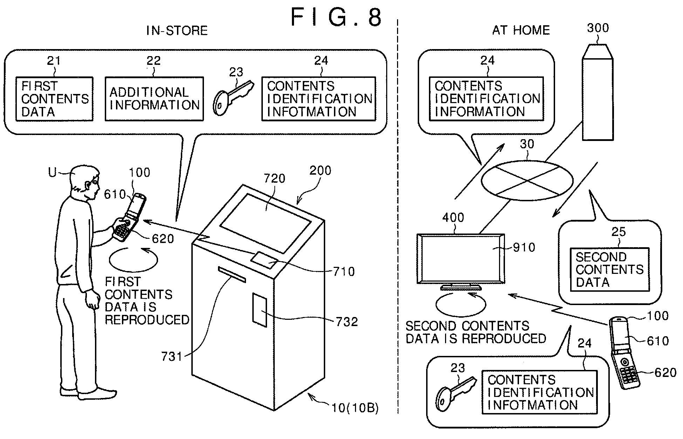

FIG. 8 is a view showing a configuration of a communication system according to a second embodiment of the present disclosure. The configuration of the communication system 10B according to the second embodiment of the present disclosure will be described below with reference to FIG. 8. As shown in FIG. 8, the communication system 10B according to the second embodiment of the present disclosure is principally different from the communication system 10A according to the first embodiment of the present disclosure in that the communication system 10B includes a communication instrument 400. The communication instrument 400, for example, corresponds to a television set, and is an apparatus suitable for reproducing contents data having a higher resolution than that in the communication terminal 100. The communication instrument 400, for example, is installed inside user's home.

More specifically, in the communication system 10B according to the second embodiment of the present disclosure, the contents identification information 24 which has been received in the store by the communication terminal 100 is transmitted to the communication instrument 400. Also, the second contents data 25 which is to be identified in accordance with the contents data identification information 24 is made to be received by the communication instrument 400. As shown in FIG. 8, the communication terminal 100 transmits the contents identification information 24 to the communication instrument 400, and transmits the first key 23 to the communication instrument 400. Also, the communication terminal 100 enables the communication instrument 400 to use the first key 23 in order to break the cipher made for the second contents data 25. In addition, the communication terminal 100 transmits the contents identification information 24 to the communication instrument 400, and transmits the additional information 22 to the communication instrument 400. Also, the communication terminal 100 enables the communication instrument 400 to use the additional information 22 in order to break the cipher made for the second contents data 25.

Hereinafter, the functional configurations of the communication terminal 100, the first information providing apparatus 200, and the second information providing apparatus 300 in the communication system 10B according to the second embodiment of the present disclosure will be described with reference to FIGS. 2 to 4. When the predetermined transmission manipulation operation has been detected by the detecting block 130, the transmitting block 140 of the communication terminal 100 in the communication system 10B according to the second embodiment of the present disclosure transmits the contents identification information 24 stored in the storing block 120 to the second information providing apparatus 300 through the communication instrument 400. As a result, the transmitting block 140 causes the communication instrument 400 to receive the second contents data 25 which is to be identified in accordance with the contents identification information 24 from the second information providing apparatus 300.

When the first key 23 is desired to be used to break both of the cipher made for the first contents data 21, and the cipher made for the second contents data 25, the storing block 120 stores therein the first key 23 received by the receiving block 110, and the transmitting block 140 transmits the first key 23 to the communication instrument 400.

When the cipher made for the second contents data 25 is desired to be broken by using a second key different from the first key 23 used to break the cipher made for the first contents data 21, the receiving block 110 further receives the second key used to break the cipher made for the second contents data 25 from the first information providing apparatus 200. The transmitting block 140 transmits the second key received by the receiving block 110 to the communication instrument 400.

### [2-2. Functional Configuration of Communication Instrument]

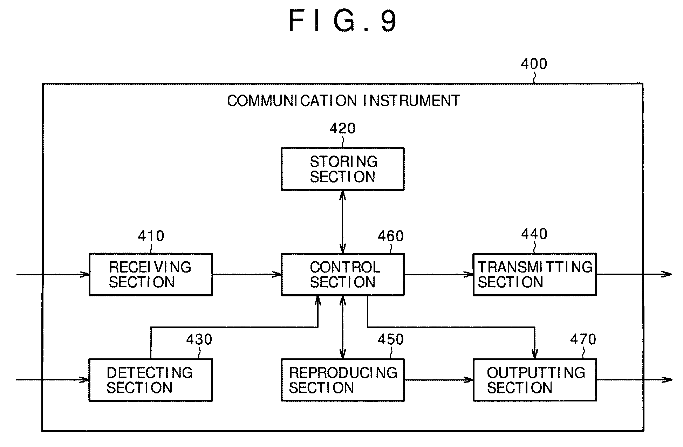

FIG. 9 is a block diagram showing a functional configuration of the communication instrument 400 in the communication system 10B according to the second embodiment of the present disclosure.

As shown in FIG. 9, the communication instrument 400 in the second embodiment of the present disclosure includes at least a receiving section 410 and a transmitting section 440. In addition, the communication instrument 400 includes a storing section 420, a detecting section 430, a reproducing section 450, a control section 460, an outputting section 470, and the like as may be necessary.

The receiving section 410 has a function of receiving the contents identification information 24 from the communication terminal 100. Although the receiving section 410, for example, can receive the contents identification information 24 inside the home, a place where the contents identification information 24 is received is by no means limited to the home. The receiving section 410, for example, can receive the contents identification information 24 from the communication terminal 100 through the network 30.

The transmitting section 440 has a function of transmitting the contents identification information 24 received by the receiving section 410 to the second information providing apparatus 300 which holds therein the second contents data 25 which is to be identified in accordance with the contents identification 24. For example, when the predetermined transmission manipulation operation has been detected by the detecting section 430, the transmitting section 440 can transmit the contents identification information 24 received by the receiving section 410 to the second identification providing apparatus 300. As a result, the communication instrument 400 can download the second contents data 25 which the second identification providing apparatus 300 holds therein. The transmission of the second contents data 25 by the transmitting section 440 is carried out either in a wireless manner or in a wired manner. The transmitting section 440, for example, can transmit the contents identification information 24 to the second identification providing apparatus 300 through the network 30. The transmitting section 440, for example, is composed of a communication apparatus.

The user U, for example, may also reproduce the second contents data 25 in the communication instrument 400 inside his/her own home or the like. That is to say, the communication instrument 400 can include a reproducing section 450 for reproducing the second contents data 25. The reproducing section 450 can reproduce the second contents data 25 in accordance with the control made by the control section 460. For example, although the reproducing section 450 can stream-reproduce the second contents data 25, the reproducing section 450 does not necessarily stream-reproduce the second contents data 25. The reproducing section 450 can also reproduce the second contents data 25 offline.

The reproducing section 450, for example, is composed of a CPU, a RAM, and the like. The CPU develops in the RAM the programs stored in the storing section 420 to execute the programs, thereby realizing a function of the reproducing section 450. However, the reproducing section 450 is by no means limited to such a configuration, and thus the reproducing section 450 may also be composed of dedicated hardware.

The storing section 420 has a function of storing therein the second contents data 25 received by the receiving section 410. In addition, the storing section 420 can also store the additional information 22 and the first key 23 which have been received by the receiving section 410. The storing section 420 can store therein various kinds of programs for making the communication instrument 400 to function. The various kinds of programs which the storing section 420 stores therein, for example, are used to realize the functions of the reproducing section 450 and the control section 460. The storing section 420, for example, is composed of a storing device such as an HDD.

The detecting section 430 has a function of detecting a manipulation operation made by the user U, and outputting a manipulation signal corresponding to the manipulation operation thus detected to the control section 460. The detecting section 430, for example, has a function of detecting a predetermined transmission manipulation operation made by the user U. Although any predetermined transmission manipulation operation may be made, for example, a manipulation operation for depressing a transmission button provided in a manipulation input area (not shown), or the like corresponds to the predetermined transmission manipulation operation. As described above, for example, it is supposed that after the user U has connected the communication instrument 400 to the network 30, thereby carrying out a preparation for transmitting the contents identification information 24 to the second information providing apparatus 300, he/she makes a predetermined transmission operation. The detecting section 430, for example, is composed of an input unit such as a button provided in the manipulation input area (not shown).

The control section 460 has a function of controlling the operations of the functional sections 410 to 470 within the communication instrument 400. The control section 460, for example, generates various kinds of requests in accordance with the manipulation operation(s) detected by the detecting section 430. The various kinds of requests thus generated are transmitted from the transmitting section 440. The control section 460, for example, is composed of a CPU, a RAM, and the like. The CPU develops in the RAM the programs stored in the storing section 420 to execute the programs, thereby realizing a function of the control section 460. However, the control section 460 is by no means limited to such a configuration, and thus the control section 460 may also be composed of dedicated hardware.

The outputting section 470 has a function of outputting various pieces of information and various kinds of requests in accordance with the control made by the control section 460. In addition, the outputting section 470 has a function of outputting the second contents data 25 reproduced by the reproducing section 450. For example, when the second contents data 25 is the sound data, the outputting section 470 is composed of a sound outputting unit. In this case, it is only necessary for the sound outputting unit to output the sound in accordance with the sound data. For example, when the second contents data 25 is moving image data, the outputting section 470 is composed of a display unit having the display area 910. In this case, it is only necessary for the display unit to output an image to the display area 910 in accordance with the moving image data.

### [2-3. Processing Executed by Communication System]

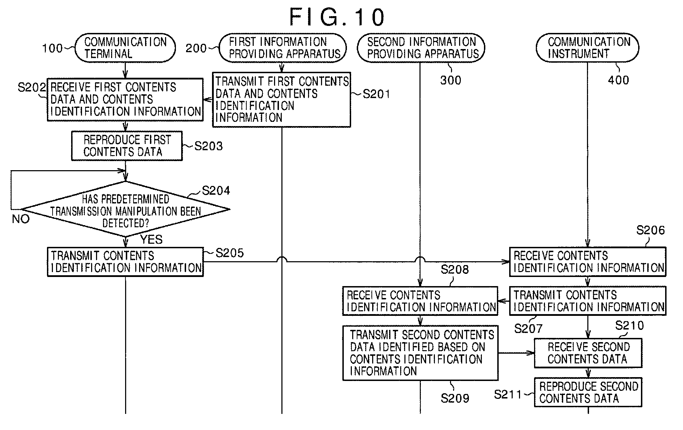

FIG. 10 is a flow chart showing a flow of processing executed by the communication system 10B according to the second embodiment of the present disclosure. The flow of processing executed by the communication system 10B according to the second embodiment of the present disclosure will be described below with reference to FIG. 10.

As shown in FIG. 10, firstly, the transmitting portion 230 of the first information providing apparatus 200 transmits both of the first contents data 21 and the contents identification information 24 to the communication terminal 100 (Step S201). Next, the receiving block 110 of the communication terminal 100 receives the first contents data 21 and the contents identification information 24 from the first information providing apparatus 200 (Step S202). The reproducing block 150 of the communication terminal 100 reproduces the first contents data 21 (Step S203).

While the first contents data 21 is reproduced by the reproducing block 150 of the communication terminal 100, for example, the outputting block 170 of the communication terminal 100 may display a message such as "will you acquire this part?" on the display area 610. In this case, for example, the user U can make a manipulation operation for selection of "YES" for this message. The manipulation operation concerned corresponds to an example of a predetermined transmission manipulation. On the other hand, for example, the user U can also make a manipulation operation for selection of "NO" for this message. The control block 160 of the communication terminal 100 determines whether or not the predetermined transmission manipulation operation has been detected by the detecting block 130 (Step S204). When the control block 160 of the communication terminal 100 determines that the predetermined transmission manipulation operation has not been detected by the detecting block 130 ("No" in Step S204), the operation is returned back to the processing in Step S204. On the other hand, when the control block 160 of the communication terminal 100 determines that the predetermined transmission manipulation operation has been detected by the detecting block 130 ("Yes" in Step S204), the transmitting block 140 transmits the contents identification information 24 to the communication instrument 400 (Step S205).

The receiving section 410 of the communication instrument 400 receives the contents identification information 24 from the communication terminal 100 (Step S206). Also, the transmitting section 440 of the communication instrument 400 transmits the contents identification information 24 to the second information providing apparatus 300 (Step S207).

The receiving portion 310 of the second information providing apparatus 300 receives the contents identification information 24 from the communication instrument 400 (Step S208). The transmitting portion 330 transmits the second contents data 25 which is to be identified based on the contents identification information 24 to the communication instrument 400 (Step S209). The receiving section 410 of the communication instrument 400 receives the second contents data 25 transmitted thereto from the second information providing apparatus 300 (Step S210). Also, the reproducing section 450 reproduces the second contents data 25 (Step S211).

### <3. Changes>

Although the embodiments of the present disclosure have been described so far with reference to the accompanying drawings, the present disclosure is by no means thereto. It is obvious that a person who has a normal knowledge in the technical field to which the present disclosure belongs hits upon various kinds of changes or modifications within the category of the technical idea disclosed in the appended claims. Also, it is understood that the various kinds of changes or modifications naturally belong to the technical scope of the present disclosure.

### <4. Conclusion>

According to the embodiments described above, the contents can be sold to the user in the store without impairing the instantaneousness. Also, the user can be caused to look and listen to the higher-definition contents data after the user has bought the contents data in the store. In addition, according to the embodiments described above, the relatively lightweight contents fitted to the communication terminal 100 can be speedily downloaded to the communication terminal 100 in the store, and thus the user can enjoy more immediately the contents data. Moreover, for example, in the environment enabling the connection to be made to the network 30, the high definition contents data can be looked and listened to.

According to the embodiments described above, it becomes essential for the seller of the contents data to have a function of delivery of the lightweight contents data in the front of the store. Therefore, even when the second information providing apparatus 300 is installed in the store, or even when the second information providing apparatus 300 is installed on the network 30, it becomes possible to realize the large cost saving for the infrastructure. In addition, since it becomes unnecessary to preserve the physical media in the store, there is offered an effect that the stock management becomes easy. In addition, the user U can speedily enjoy the lightweight contents data by using the communication terminal 100 without receiving the wasteful data by only making the simple manipulation operation. Also, the user U can freely look at the high-definition contents data inside his/her home as well or the like. Thus, there is also offered an effect that the convenience is enhanced.

The present disclosure contains subject matter related to that disclosed in Japanese Priority Patent Application JP 2010-263819.

In so far as embodiments of the invention are implemented, at least in part, by software-controlled data processing apparatus, it will be understood that such apparatus, and the software, firmware or other computer program instructions by which such apparatus is controlled, and media by which such software is provided, represent embodiments of the present invention.

## Claims

1. A communication terminal (100), comprising:
a receiving block (110) adapted to receive first contents data (21), and contents identification information (24) used to identify second contents data (25) whose size is larger than that of the first contents data from a first information providing apparatus (200), wherein the communication terminal is configured to communicate with the first information providing apparatus (200) by using a proximity radio transferring technique;
a storing block (120) adapted to store therein the first contents data and the contents identification information;
a detecting block (130) adapted to detect a predetermined transmission manipulation made by a user; and
a transmitting block (140) adapted to transmit the contents identification information stored by said storing block to a second information providing apparatus (300) holding therein the second contents data which is to be identified in accordance with the contents identification information when the predetermined transmission manipulation is detected by said detecting block; wherein the communication terminal is configured to communicate with the second information providing apparatus (300) via a network, and
wherein the second contents data has a higher definition than the first contents data.

2. The communication terminal according to claim 1, further comprising:
a reproducing block (150) adapted to reproduce the first contents data stored in said storing block.

3. The communication terminal according to claim 2, wherein said receiving block further receives a first key (23) used to break cipher made for the first contents data stored in said storing block; and
said reproducing block reproduces the first contents data after the cipher made for the first contents data stored in said storing block is broken by using the first key received by said receiving block.

4. The communication terminal according to claim 3, wherein said receiving block receives the second contents data which is to be identified in accordance with the contents identification information from said second information providing apparatus.

5. The communication terminal according to claim 4, wherein said storing block stores therein the first key received by said receiving block; and
when the first key is adapted to be used for a purpose as well of breaking the cipher made for the second contents data, said reproducing block breaks the cipher made for the second contents data received by said receiving block by using the first key, and reproduces the second contents data.

6. The communication terminal according to claim 4, wherein said receiving block further receives a second key used to break cipher made for the second contents data from said first information providing apparatus; and
said reproducing block breaks the cipher made for the second contents data received by said receiving block by using the second key received by said receiving block, and reproduces the second contents data after.

7. The communication terminal according to claim 3, wherein when the predetermined transmission manipulation is detected by said detecting block, said transmitting block transmits the contents identification information stored in said storing block to said second information providing apparatus via a communication instrument, and causes said communication instrument to receive the second contents data which is to be identified in accordance with the contents identification information from said second identification providing apparatus.

8. The communication terminal according to claim 7, wherein said storing block stores therein the first key received by said receiving block; and
when the first key is adapted to be used for a purpose as well of breaking the cipher made for the second contents data, said transmitting block transmits the first key to said communication instrument.

9. The communication terminal according to claim 7, wherein said receiving block further receives a second key used to break cipher made for the second contents data from said first information providing apparatus; and
said transmitting block transmits the second key received by said receiving block to said communication instrument.

10. A communication method for a communication terminal (100), comprising:
receiving (S102) first contents data, and contents identification information used to identify second contents data whose size is larger than that of the first contents data from a first information providing apparatus (200), wherein the communication terminal is configured to communicate with the first information providing apparatus (200) by using a proximity radio transferring technique;
storing the first contents data and the contents identification information;
detecting (S104) a predetermined transmission manipulation made by a user; and
transmitting (S105) the contents identification information to a second information providing apparatus (300) holding therein the second contents data which is to be identified in accordance with the contents identification information when the predetermined transmission manipulation is detected, wherein the communication terminal is configured to communicate with the second information providing apparatus (300) via a network, and
wherein the second contents data has a higher definition than the first contents data.

11. A communication system, comprising:
a first information providing apparatus (200) including
a receipt-of-money managing portion (270) adapted to carry out receipt of an amount of paid money for first contents data,
a control portion (280) adapted to calculate a difference amount of money by subtracting an amount of money of the first contents data from the amount of paid money received by said receipt-of-money managing portion,
a payment-of-money managing portion (290) adapted to output the difference amount of money, and
a transmitting portion (230) adapted to transmit the first contents data, and contents identification information used to identify second contents data whose size is larger than that of the first contents data to a communication terminal (100), wherein the first information providing apparatus (200) is configured to communicate with the communication terminal (100) by using a proximity radio transferring technique, and
wherein the second contents data has a higher definition than the first contents data; and
a second information providing apparatus (300) including
a receiving portion (310) receiving the contents identification information from said communication terminal, wherein the second information providing apparatus is configured to communicate with the communication terminal via a network,
a storing portion (320),
a control portion (340) registering an amount of money of the second contents data which is to be identified in accordance with the contents identification information received from said receiving portion in said storing portion, and
a transmitting portion (330) adapted to transmit the second contents data to the communication terminal (100).

12. The communication system according to claim 11, wherein
said first information providing apparatus further comprises
an inputting portion adapted to receive an input of prepay information representing an effect that payment for the second contents data is carried out in said first information providing apparatus;
said control portion of said first information providing apparatus determines whether or not the input of the prepay information is received by said inputting portion, calculates the difference amount of money by subtracting an amount of money of the second contents data together with an amount of money of the first contents data from the amount of paid money received by said receipt-of-money managing portion when it is determined that the input of the prepay information is received, and calculates the difference amount of money by subtracting an amount of money of the first contents data from the amount of paid money received by said receipt-of-money managing portion when it is determined that the input of the prepay information is not received;
said control portion of said second information providing apparatus registers an amount of money of the second contents data by said control portion of said first information providing apparatus in said storing portion when it is determined that the input of the prepay information is received; and
an amount of money of the second contents subtracted by said control portion of said first information providing apparatus is set lower than an amount of money of the second contents data registered by said control portion of said second information providing apparatus.

## Patentansprüche

1. Kommunikationsendgerät (100), das Folgendes umfasst:
einen Empfangsblock (110), der angepasst ist, um erste Inhaltsdaten (21) und Inhaltsidentifizierungsinformationen (24), die verwendet werden, um zweite Inhaltsdaten (25) zu identifizieren, deren Umfang größer als derjenige der ersten Inhaltsdaten ist, von einer ersten Informationsbereitstellungsvorrichtung (200) zu empfangen, wobei das Kommunikationsendgerät konfiguriert ist, um mit der ersten Informationsbereitstellungsvorrichtung (200) durch Verwendung einer Nahfeldfunkübertragungstechnik zu kommunizieren;
einen Speicherblock (120), der angepasst ist, um die ersten Inhaltsdaten und die Inhaltsidentifizierungsinformationen einzuspeichern;
einen Detektierblock (130), der angepasst ist, um eine von einem Benutzer vorgenommene vorbestimmte Übermittlungsmanipulation zu detektieren; und
einen Übermittlungsblock (140), der angepasst ist, um die durch den Speicherblock gespeicherten Inhaltsidentifizierungsinformationen an eine zweite Informationsbereitstellungsvorrichtung (300) zu übermitteln, die die zweiten Inhaltsdaten enthält, die gemäß den Inhaltsidentifizierungsinformationen zu identifizieren sind, wenn die vorbestimmte Übermittlungsmanipulation durch den Detektierblock detektiert wird; wobei das Kommunikationsendgerät konfiguriert ist, um mit der zweiten Informationsbereitstellungsvorrichtung (300) über ein Netz zu kommunizieren, und
wobei die zweiten Inhaltsdaten eine höhere Auflösung als die ersten Inhaltsdaten aufweisen.

2. Kommunikationsendgerät nach Anspruch 1, das ferner Folgendes umfasst:
einen Reproduzierblock (150), der angepasst ist, um die im Speicherblock gespeicherten ersten Inhaltsdaten zu reproduzieren.

3. Kommunikationsendgerät nach Anspruch 2, wobei der Empfangsblock ferner einen ersten Schlüssel (23) empfängt, der zum Dechiffrieren der im Speicherblock gespeicherten ersten Inhaltsdaten verwendet wird; und
der Reproduzierblock die ersten Inhaltsdaten nach dem Dechiffrieren der im Speicherblock gespeicherten ersten Inhaltsdaten durch Verwendung des durch den Empfangsblock empfangenen ersten Schlüssels reproduziert.

4. Kommunikationsendgerät nach Anspruch 3, wobei der Empfangsblock die zweiten Inhaltsdaten, die gemäß den Inhaltsidentifizierungsinformationen zu identifizieren sind, von der zweiten Informationsbereitstellungsvorrichtung empfängt.

5. Kommunikationsendgerät nach Anspruch 4, wobei der Speicherblock den durch den Empfangsblock empfangenen ersten Schlüssel einspeichert; und,
wenn der erste Schlüssel angepasst ist, um auch für den Zweck des Dechiffrierens der zweiten Inhaltsdaten verwendet zu werden, der Reproduzierblock die durch den Empfangsblock empfangenen zweiten Inhaltsdaten durch Verwendung des ersten Schlüssels dechiffriert und die zweiten Inhaltsdaten reproduziert.

6. Kommunikationsendgerät nach Anspruch 4, wobei der Empfangsblock ferner einen zweiten Schlüssel, der zum Dechiffrieren der zweiten Inhaltsdaten verwendet wird, von der ersten Informationsbereitstellungsvorrichtung empfängt; und
der Reproduzierblock die durch den Empfangsblock empfangenen zweiten Inhaltsdaten durch Verwendung des durch den Empfangsblock empfangenen zweiten Schlüssels dechiffriert und die zweiten Inhaltsdaten danach reproduziert.

7. Kommunikationsendgerät nach Anspruch 3, wobei, wenn die vorbestimmte Übermittlungsmanipulation durch den Detektierblock detektiert wird, der Übermittlungsblock die im Speicherblock gespeicherten Inhaltsidentifizierungsinformationen an die zweite Informationsbereitstellungsvorrichtung über ein Kommunikationsinstrument übermittelt und bewirkt, dass das Kommunikationsinstrument die zweiten Inhaltsdaten, die gemäß den Inhaltsidentifizierungsinformationen zu identifizieren sind, von der zweiten Identifizierungsbereitstellungsvorrichtung empfängt.

8. Kommunikationsendgerät nach Anspruch 7, wobei der Speicherblock den durch den Empfangsblock empfangenen ersten Schlüssel einspeichert; und,
wenn der erste Schlüssel angepasst ist, um auch für den Zweck des Dechiffrierens der zweiten Inhaltsdaten verwendet zu werden, der Übermittlungsblock den ersten Schlüssel an das Kommunikationsinstrument übermittelt.

9. Kommunikationsendgerät nach Anspruch 7, wobei der Empfangsblock ferner einen zweiten Schlüssel, der zum Dechiffrieren der zweiten Inhaltsdaten verwendet wird, von der ersten Informationsbereitstellungsvorrichtung empfängt; und
der Übermittlungsblock den durch den Empfangsblock empfangenen zweiten Schlüssel an das Kommunikationsinstrument übermittelt.

10. Kommunikationsverfahren für ein Kommunikationsendgerät (100), das Folgendes umfasst:
Empfangen (S102) von ersten Inhaltsdaten und Inhaltsidentifizierungsinformationen, die verwendet werden, um zweite Inhaltsdaten zu identifizieren, deren Umfang größer als derjenige der ersten Inhaltsdaten ist, von einer ersten Informationsbereitstellungsvorrichtung (200), wobei das Kommunikationsendgerät konfiguriert ist, um mit der ersten Informationsbereitstellungsvorrichtung (200) durch Verwendung einer Nahfeldfunkübertragungstechnik zu kommunizieren;
Speichern der ersten Inhaltsdaten und der Inhaltsidentifizierungsinformationen;
Detektieren (S104) einer von einem Benutzer vorgenommenen vorbestimmten Übermittlungsmanipulation; und
Übermitteln (S105) der Inhaltsidentifizierungsinformationen an eine zweite Informationsbereitstellungsvorrichtung (300), die die zweiten Inhaltsdaten enthält, die gemäß den Inhaltsidentifizierungsinformationen zu identifizieren sind, wenn die vorbestimmte Übermittlungsmanipulation detektiert wird, wobei das Kommunikationsendgerät konfiguriert ist, um mit der zweiten Informationsbereitstellungsvorrichtung (300) über ein Netz zu kommunizieren, und
wobei die zweiten Inhaltsdaten eine höhere Auflösung als die ersten Inhaltsdaten aufweisen.

11. Kommunikationssystem, das Folgendes umfasst:
eine erste Informationsbereitstellungsvorrichtung (200), die Folgendes beinhaltet:
einen Geldempfangsverwaltungsabschnitt (270), der angepasst ist, um den Empfang eines Betrags von gezahltem Geld für erste Inhaltsdaten auszuführen,
einen Steuerabschnitt (280), der angepasst ist, um einen Differenzgeldbetrag durch Subtrahieren eines Geldbetrags der ersten Inhaltsdaten vom Betrag von gezahltem Geld, der durch den Geldempfangsverwaltungsabschnitt empfangen wird, zu berechnen,
einen Geldzahlungsverwaltungsabschnitt (290), der angepasst ist, um den Differenzgeldbetrag auszugeben, und
einen Übermittlungsabschnitt (230), der angepasst ist, um die ersten Inhaltsdaten und Inhaltsidentifizierungsinformationen, die verwendet werden, um zweite Inhaltsdaten zu identifizieren, deren Umfang größer als derjenige der ersten Inhaltsdaten ist, an ein Kommunikationsendgerät (100) zu übermitteln, wobei die erste Informationsbereitstellungsvorrichtung (200) konfiguriert ist, um mit dem Kommunikationsendgerät (100) durch Verwendung einer Nahfeldfunkübertragungstechnik zu kommunizieren, und
wobei die zweiten Inhaltsdaten eine höhere Auflösung als die ersten Inhaltsdaten aufweisen; und
eine zweite Informationsbereitstellungsvorrichtung (300), die Folgendes beinhaltet:
einen Empfangsabschnitt (310), der die Inhaltsidentifizierungsinformationen vom Kommunikationsendgerät empfängt, wobei die zweite Informationsbereitstellungsvorrichtung konfiguriert ist, um mit dem Kommunikationsendgerät über ein Netz zu kommunizieren,
einen Speicherabschnitt (320),
einen Steuerabschnitt (340), der einen Geldbetrag der zweiten Inhaltsdaten, die gemäß den Inhaltsidentifizierungsinformationen zu identifizieren sind, die vom Empfangsabschnitt empfangen werden, im Speicherabschnitt erfasst, und
einen Übermittlungsabschnitt (330), der angepasst ist, um die zweiten Inhaltsdaten an das Kommunikationsendgerät (100) zu übermitteln.

12. Kommunikationssystem nach Anspruch 11, wobei
die erste Informationsbereitstellungsvorrichtung ferner einen Eingabeabschnitt umfasst, der angepasst ist, um eine Eingabe von Vorauszahlungsinformationen zu empfangen, die den Effekt darstellen, dass die Zahlung für die zweiten Inhaltsdaten in der ersten Informationsbereitstellungsvorrichtung ausgeführt wird;
der Steuerabschnitt der ersten Informationsbereitstellungsvorrichtung bestimmt, ob die Eingabe der Vorauszahlungsinformationen durch den Eingabeabschnitt empfangen wurde oder nicht, den Differenzgeldbetrag durch Subtrahieren eines Geldbetrags der zweiten Inhaltsdaten nebst einem Geldbetrag der ersten Inhaltsdaten vom Betrag von gezahltem Geld, der durch den Geldempfangsverwaltungsabschnitt empfangen wurde, berechnet, wenn bestimmt wird, dass die Eingabe der Vorauszahlungsinformationen empfangen wurde, und den Differenzgeldbetrag durch Subtrahieren eines Geldbetrags der ersten Inhaltsdaten vom Betrag von gezahltem Geld, der durch den Geldempfangsverwaltungsabschnitt empfangen wurde, berechnet, wenn bestimmt wird, dass die Eingabe der Vorauszahlungsinformationen nicht empfangen wurde;
der Steuerabschnitt der zweiten Informationsbereitstellungsvorrichtung einen Geldbetrag der zweiten Inhaltsdaten durch den Steuerabschnitt der ersten Informationsbereitstellungsvorrichtung im Speicherabschnitt erfasst, wenn bestimmt wird, dass die Eingabe der Vorauszahlungsinformationen empfangen wurde; und
ein Geldbetrag der zweiten Inhalte, der durch den Steuerabschnitt der ersten Informationsbereitstellungsvorrichtung subtrahiert wurde, niedriger angegeben wird als ein Geldbetrag der zweiten Inhaltsdaten, der durch den Steuerabschnitt der zweiten Informationsbereitstellungsvorrichtung erfasst wurde.

## Revendications

1. Terminal (100) de communication, comportant :
un bloc (110) de réception prévu pour recevoir des premières données (21) de contenus, et des informations (24) d'identification de contenus utilisées pour identifier des deuxièmes données (25) de contenus dont la taille est supérieure à celle des premières données de contenus en provenance d'un premier appareil (200) de fourniture d'informations, le terminal de communication étant configuré pour communiquer avec le premier appareil (200) de fourniture d'informations en utilisant une technique de transfert par radio de proximité ;
un bloc (120) de stockage prévu pour stocker dans celui-ci les premières données de contenus et les informations d'identification de contenus ;
un bloc (130) de détection prévu pour détecter une manipulation d'émission prédéterminée réalisée par un utilisateur ; et
un bloc (140) d'émission prévu pour émettre les informations d'identification de contenus stockées par ledit bloc de stockage à un deuxième appareil (300) de fourniture d'informations renfermant les deuxièmes données de contenus appelées à être identifiées d'après les informations d'identification de contenus lorsque la manipulation d'émission prédéterminée est détectée par ledit bloc de détection ; le terminal de communication étant configuré pour communiquer avec le deuxième appareil (300) de fourniture d'informations via un réseau, et
les deuxièmes données de contenus présentant une plus haute définition que les premières données de contenus.

2. Terminal de communication selon la revendication 1, comportant en outre :
un bloc (150) de reproduction prévu pour reproduire les premières données de contenus stockées dans ledit bloc de stockage.

3. Terminal de communication selon la revendication 2, ledit bloc de réception recevant en outre une première clé (23) utilisées pour déchiffrer les premières données de contenus stockées dans ledit bloc de stockage ; et
ledit bloc de reproduction reproduisant les premières données de contenus après que les premières données de contenus stockées dans ledit bloc de stockage ont été déchiffrées en utilisant la première clé reçue par ledit bloc de réception.

4. Terminal de communication selon la revendication 3, ledit bloc de réception recevant les deuxièmes données de contenus appelées à être identifiées d'après les informations d'identification de contenus en provenance dudit deuxième appareil de fourniture d'informations.

5. Terminal de communication selon la revendication 4, ledit bloc de stockage stockant dans celui-ci la première clé reçue par ledit bloc de réception ; et lorsque la première clé est prévue pour être utilisée également dans le but de déchiffrer les deuxièmes données de contenus, ledit bloc de reproduction déchiffrant les deuxièmes données de contenus reçues par ledit bloc de réception en utilisant la première clé, et reproduisant les deuxièmes données de contenus.

6. Terminal de communication selon la revendication 4, ledit bloc de réception recevant en outre une deuxième clé utilisée pour déchiffrer les deuxièmes données de contenus en provenance dudit premier appareil de fourniture d'informations ; et
ledit bloc de reproduction déchiffrant les deuxièmes données de contenus reçues par ledit bloc de réception en utilisant la deuxième clé reçue par ledit bloc de réception, et reproduisant ensuite les deuxièmes données de contenus.

7. Terminal de communication selon la revendication 3, ledit bloc d'émission envoyant, lorsque la manipulation d'émission prédéterminée est détectée par ledit bloc de détection, les informations d'identification de contenus stockées dans ledit bloc de stockage audit deuxième appareil de fourniture d'informations via un instrument de communication, et faisant en sorte que ledit instrument de communication reçoive les deuxièmes données de contenus appelées à être identifiées d'après les informations d'identification de contenus en provenance dudit deuxième appareil de fourniture d'identification.

8. Terminal de communication selon la revendication 7, ledit bloc de stockage stockant dans celui-ci la première clé reçue par ledit bloc de réception ; et lorsque la première clé est prévue pour être utilisée également dans le but de déchiffrer les deuxièmes données de contenus, ledit bloc d'émission envoyant la première clé audit instrument de communication.

9. Terminal de communication selon la revendication 7, ledit bloc de réception recevant en outre une deuxième clé utilisée pour déchiffrer les deuxièmes données de contenus en provenance dudit premier appareil de fourniture d'informations ; et
ledit bloc d'émission envoyant la deuxième clé reçue par ledit bloc de réception audit instrument de communication.

10. Procédé de communication pour un terminal (100) de communication, comportant les étapes consistant à :
recevoir (S102) des premières données de contenus, et des informations d'identification de contenus utilisées pour identifier des deuxièmes données de contenus dont la taille est supérieure à celle des premières données de contenus en provenance d'un premier appareil (200) de fourniture d'informations, le terminal de communication étant configuré pour communiquer avec le premier appareil (200) de fourniture d'informations en utilisant une technique de transfert par radio de proximité ;
stocker les premières données de contenus et les informations d'identification de contenus ;
détecter (S104) une manipulation d'émission prédéterminée réalisée par un utilisateur ; et
envoyer (S105) les informations d'identification de contenus à un deuxième appareil (300) de fourniture d'informations renfermant les deuxièmes données de contenus appelées à être identifiées d'après les informations d'identification de contenus lorsque la manipulation d'émission prédéterminée est détectée, le terminal de communication étant configuré pour communiquer avec le deuxième appareil (300) de fourniture d'informations via un réseau, et
les deuxièmes données de contenus présentant une plus haute définition que les premières données de contenus.

11. Système de communication, comportant :
un premier appareil (200) de fourniture d'informations comprenant
une partie (270) de gestion de perception d'argent prévue pour réaliser la perception d'un montant d'argent payé pour des premières données de contenus, une partie (280) de commande prévue pour calculer un montant différentiel d'argent en soustrayant un montant d'argent des premières données de contenus du montant d'argent payé reçu par ladite partie de gestion de perception d'argent,
une partie (290) de gestion de paiement d'argent prévue pour délivrer en sortie le montant différentiel d'argent, et
une partie (230) d'émission prévue pour émettre les premières données de contenus, et des informations d'identification de contenus utilisées pour identifier des deuxièmes données de contenus dont la taille est supérieure à celle des premières données de contenus à un terminal (100) de communication, le premier appareil (200) de fourniture d'informations étant configuré pour communiquer avec le terminal (100) de communication en utilisant une technique de transfert par radio de proximité, et
les deuxièmes données de contenus présentant une plus haute définition que les premières données de contenus ; et
un deuxième appareil (300) de fourniture d'informations comprenant
une partie (310) de réception recevant les informations d'identification de contenus en provenance dudit terminal de communication, le deuxième appareil de fourniture d'informations étant configuré pour communiquer avec le terminal de communication via un réseau,
une partie (320) de stockage,
une partie (340) de commande enregistrant un montant d'argent des deuxièmes données de contenus appelées à être identifiées d'après les informations d'identification de contenus reçues en provenance de ladite partie de réception dans ladite partie de stockage, et
une partie d'émission (330) prévue pour envoyer les deuxièmes données de contenus au terminal (100) de communication.

12. Système de communication selon la revendication 11,
ledit premier appareil de fourniture d'informations comportant en outre une partie d'entrée prévue pour recevoir une entrée d'informations de prépaiement représentant un effet selon lequel un paiement pour les deuxièmes données de contenus est réalisé dans ledit premier appareil de fourniture d'informations ;
ladite partie de commande dudit premier appareil de fourniture d'informations déterminant si l'entrée des informations de prépaiement est reçue ou non par ladite partie d'entrée, calculant le montant différentiel d'argent en soustrayant un montant d'argent des deuxièmes données de contenus combiné à un montant d'argent des premières données de contenus du montant d'argent payé reçu par ladite partie de gestion de perception d'argent lorsqu'il est déterminé que l'entrée des informations de prépaiement est reçue, et calculant le montant différentiel d'argent en soustrayant un montant d'argent des premières données de contenus du montant d'argent payé reçu par ladite partie de gestion de perception d'argent lorsqu'il est déterminé que l'entrée des informations de prépaiement n'est pas reçue ;
ladite partie de commande dudit deuxième appareil de fourniture d'informations enregistrant un montant d'argent des deuxièmes données de contenus par ladite partie de commande dudit premier appareil de fourniture d'informations dans ladite partie de stockage lorsqu'il est déterminé que l'entrée des informations de prépaiement est reçue ; et
un montant d'argent des deuxièmes contenus soustrait par ladite partie de commande dudit premier appareil de fourniture d'informations étant pris inférieur à un montant d'argent des deuxièmes données de contenus enregistré par ladite partie de commande dudit deuxième appareil de fourniture d'informations.
